# EUROPEAN PATENT SPECIFICATION

(11) **EP 2 759 461 B1**
(45) Date of publication and mention of the grant of the patent: **27.04.2016**
(21) Application number: 14151759.9
(22) Date of filing: 20.01.2014
(51) Int. Cl.: B62J 15/00, B62J 23/00

(54) **Fork guard structure for a motorcycle**
Gabelschutzstruktur für ein Motorrad
Structure d'un protecteur de fourche pour motocyclette

(30) Priority: 25.01.2013 JP 2013011700
(43) Date of publication of application: 30.07.2014
(73) Proprietor: Honda Motor Co., Ltd., Tokyo 107-8556 (JP)
(72) Inventor: Takizawa, Kota, Saitama, 351-0193 (JP); Horiuchi, Tetsu, Saitama, 351-0193 (JP); Ebato, Kaori, Saitama, 351-0193 (JP)
(74) Representative: Ahner, Philippe

(56) References cited:
- JP-A- 2008 024 226
- US-A1- 2007 024 018

## Description

### [Technical Field]

The present invention relates to a fork guard for protecting a front fork and, more specifically, to a fork guard structure fixed to the inside of the front fork.

### [Background Art]

A fork cover known as a fork guard structure protecting a front fork is provided, separately from a front fender, in a position more outward of the front fork in a vehicle-width direction than the front fender placed outward of the front fork in the vehicle-width direction (see, for example, Patent Literature 1).

### [Citation List]

### [Patent Literature]

[Patent Literature 1] JP-A No. H11-278339
[Patent Literature 2] US-A-2007/024018
[Patent Literature 3] JP-A_2008/024226

### [Summary of Invention]

### [Technical Problem]

The foregoing patent literature 1 requires the ensuring of continuity of an exterior surface with consideration given to a flow of traveling air and appearance quality, because the fork cover is mounted to the outside of the front fender. This limits the degree of freedom in the placement of the fork cover, resulting in difficulty in placing the front fork and the front fender, and the fork cover close to each other, thus making it difficult to achieve further enhanced protective effect of protecting the front fork by use of the fork cover. The patent literature 2, on which the preamble of claim 1 is based, and 3 concern fork covers which degrade the aerodynamics of the motorcycle.

The present invention has been made in light of the foregoing circumstances and it is an object of the present invention to provide a fork guard structure that is likely to circumvent constraints of a flow of travelling air and appearance quality and also to achieve further enhanced effects of protection while being designed to mount a fork guard protecting a front fork to a front fender.

### [Solution to Problem]

To attain this object, the present invention provides a fork guard structure according to claim 1.

With this construction, since the fork guards are secured to the inside of the front fender, it is likely to circumvent constraints of a flow of travelling air and appearance quality, and the fork guards can be placed as close to the buffers as possible. Accordingly, an enhancement in the effect of protecting the front fork is made possible.

In this construction, each of the fork guards (30L, 30R) may have a surface facing, in use, at least outward in a vehicle-width direction, and the surface may form part of a cylinder adapted to extend along the corresponding buffer (26). With this construction, the fork guards are formed into a shape along the shape of the front fork, resulting in a further enhancement in the effect of protecting the front fork.

Also, with this construction, after the front fender and the front fork have been sub-assembled, the fork guards are able to be assembled. Also, by use of a space between the left and right buffers, the fork guards are inserted and rotated to be secured on the outer sides of the buffers. This makes it possible to enhance the ability of assembling of the fork guards.

In the foregoing construction, the front fender (34) may be formed with an opening (34g) for insertion of the front fork (13), and the fork guards (30L, 30R) may be placed to block a part of the opening (34g). With this construction, a large opening for front-fork insertion is formed in the front fender to facilitate the ability to assemble the front fork and the front fender into one. And, since a part of the opening is blocked with the fork guards, the area of the opening for passing from the front wheel into above the front fender is minimized as possible, so that the amount of water and/or the like flying in the upward direction of the front fender can be reduced.

In the foregoing construction, the fork guards (30L, 30R) may be provided with rib walls (30j) adapted to be placed rearward of the buffers to extend toward the center of a vehicle body in the vehicle-width direction. With this construction, water and/or the like splashed at the rear of the front fender by the front wheel can be prevented from flying forward of the front fender by being scraped off with the rib walls, resulting in an increase in the effect of protecting the front fork.

In the foregoing construction, the left and right buffers (26) may be supported and coupled by a bottom bridge. The front fender (34) may have a top face adapted to be fixed to the bottom bridge. The fork guards (30L, 30R) may be fixed to the front fender (34) in positions, in use, forward and rearward of the bottom bridge (25). With this construction, the fork guards are fixed to the front fender while being placed on the front side and the rear side of the bottom bridge which is a stiffness member, thereby improving the stiffness of the fixing portions of the fork guards. As a result, since the support stiffness is high even when the fork guards and the buffers are placed close to each other, it is possible to avoid the interference between the fork guards and the buffers to offer effective protection for the front fork.

In the foregoing construction, a fastening between the bottom bridge (25) and the front fender (34) may be provided between the pair of the left and right fork guards (30L, 30R). With this construction, since the front fender itself to which the fork guards are secured is fixed to the bottom bridge between the fork guards, the support stiffness of the front fender can have an effect on the fork guards.

In the foregoing construction, each of the buffers (26) may be structured in a telescopic form having an outer cylinder (102) formed in a lower portion and an inner cylinder (101) formed in an upper portion. A largest diameter portion (30a) may be formed at an upper end of the outer cylinder (102). A lower end (30u) of each fork guard (30L, 30R) may be adapted to be located within a range of a vertical width (W) of the largest diameter portion (30a). With this construction, close proximity placement of the front fork to the fork guards can be provided, and the fork guards are made appear to be integrated with the front fork, leading to improved appearance quality.

In the foregoing construction, a sidewall (34b) of the front fender (34) and the fork guards (30L, 30R) may abut on each other. With this construction, an increase in stiffness of the sidewall of the front, fender is offered by the fork guards.

### [Advantageous Effects of Invention]

According to the present invention, since the fork guards are fixed to the inside of the front fender, it is likely to circumvent constraints of a flow of travelling air and appearance quality, and the fork guards can be placed as close to the buffers as possible. Accordingly, it is possible to enhance the effect of protecting the front fork.

Since each fork guard has a surface facing, in use at least outward in the vehicle-width direction, the surface forming part of a cylinder adapted to extend along the corresponding buffer, the fork guard is formed in a shape along the shape of the front fork. Because of this, the effect of protecting the front fork is further increased.

Since the front fender is formed with an opening for insertion of the front fork and the fork guards are placed to block a part of the opening, the size of the opening for front-fork insertion formed in the front fender is increased to facilitate the ability to assemble the front fork and the front fender to each other. Also, since the opening is partially blocked with the fork guards, the area of the opening for passing from the front wheel into above the front fender is minimized as possible, so that the amount of water and/or the like flying in the upward direction of the front fender can be reduced.

Since each of the fork guards is formed in such a manner as to surround, in use, the front, the outer side and the rear of a fork pipe include in the corresponding buffer and to be removable while the front fender is fixed to the front fork, and also the fork guards are adapted to be fixed to the front fender by rotating about axes of the buffers, after the front fender and the front fork have been sub-assembled, the fork guards are able to be assembled. Also, by use of a space between the left and right buffers, the fork guards are inserted and rotated to be secured on the outer sides of the buffers. This makes it possible to enhance the ability of assembling of the fork guards.

Since the fork guards are provided with the rib walls adapted to be placed rearward of the buffers to extend toward the center of a vehicle body in the vehicle-width direction, water and/or the like splashed at the rear of the front fender by the front wheel can be prevented from flying forward of the front fender by being scraped off with the rib walls, resulting in an increase in the effect of protecting the front fork.

Since the left and right buffers are supported and coupled by the bottom bridge, also the front fender has a top face adapted to be fixed to the bottom bridge, and also the fork guards are fixed to the front fender in positions, in use, forward and rearward of the bottom bridge, the fork guards are fixed to the front fender while being placed on the front side and the rear side of the bottom bridge which is a stiffness member in order to improve the stiffness of the fixing portions of the fork guards. Therefore, since the support stiffness is high even when the fork guards and the buffers are placed close to each other, it is possible to avoid the interference between the fork guards and the buffers to offer effective protection for the front fork.

Since the fastening between the bottom bridge and the front fender is provided between a pair of the left and right fork guards, the front fender itself to which the fork guards are secured is fixed to the bottom bridge between the fork guards. Because of this, the support stiffness of the front fender can have an effect on the fork guards.

Since each of the buffers is structured in a telescopic form having an outer cylinder formed in the lower portion and an inner cylinder formed in the upper portion, also a largest diameter portion is formed at an upper end of the outer cylinder, and also a lower end of each of the fork guards is adapted to be located within a range of a vertical width of the largest diameter portion, close proximity placement of the front fork to the fork guards can be provided, and the fork guards can be made appear to be integrated with the front fork, leading to improved appearance quality.

Since the sidewall of the front fender and the fork guards abut on each other, an increase in stiffness on the sidewall of the front fender is offered by the fork guards.

### [Brief Description of Drawings]

[Fig. 1] Fig. 1 is a left side view of a motorcycle adopting a fork guard structure according to one embodiment of the present invention.
[Fig. 2] Fig. 2 is a front view showing the motorcycle.
[Fig. 3] Fig. 3 is a sectional view taken along line III-III in Fig. 1.
[Fig. 4] Fig. 4 is a sectional view taken along line IV-IV in Fig. 2.
[Fig. 5] Fig. 5 is an explanatory diagram showing a front fork and a front fender.
[Fig. 6] Fig. 6 is a perspective view illustrating an inner side of the front fender.
[Fig. 7] Fig. 7 is an explanatory diagram illustrating the inner side of the front fender.
[Fig. 8] Fig. 8 is an enlarged view showing essential parts of the front fender and a fork guard in Fig. 7.
[Fig. 9] Fig. 9 is a sectional view showing the front fender and the fork guard.
[Fig. 10] Fig. 10 is a side view showing essential parts of the front fork and the fork guard.
[Fig. 11] Fig. 11 is a sectional view taken along line XI-XI in Fig. 8.
[Fig. 12] Fig. 12 is operation diagrams showing how to mount the fork guard.

### [Description of Embodiments]

Hereinafter, an embodiment of the present invention will be described with reference to the accompanying drawings. It is to be noted that, throughout the description, references to directions, such as front, rear, left, right, upward and downward, are made with reference to a vehicle body, unless otherwise stated. It is also to be noted that, in the drawings, reference sign FR denotes the front of the vehicle body, reference sign UP denotes the upper side of the vehicle body, and reference sign LE denotes the left of the vehicle body.

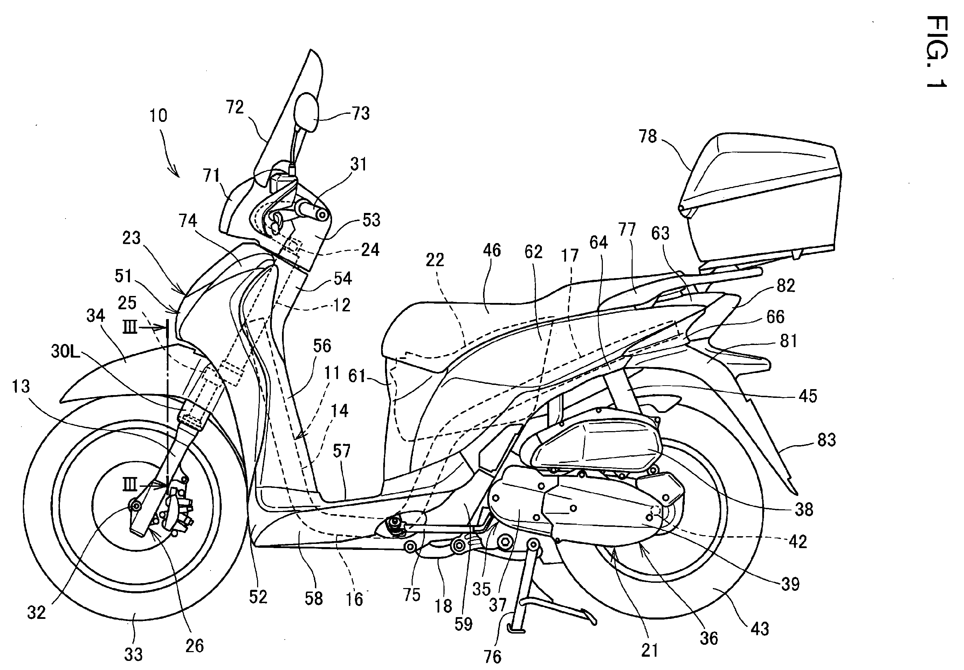

Fig. 1 is a left side view of a motorcycle 10 adopting a fork guard structure according to one embodiment of the present invention.

In the motorcycle 10, a front fork 13 is steerably mounted on head pipe 12 forming a front end of a body frame 11, a power unit 21 is vertically swingably mounted at a lower rear end of a lower frame 16 forming a lower portion of the body frame 11 through a link 18, and a storage box 22 is mounted on a rear frame 17 forming a rear portion of the body frame 11.

The body frame 11 is made up of the head pipe 12, a down frame 14 extending from the head pipe 12 in an obliquely rearward and downward direction, a pair of the left and right lower frames 16 connected at front ends to the left and right sides of the down frame 14 to extend rearward (only the lower frame 16 located on the viewer side is illustrated), and a pair of the left and right rear frames 17 provided integrally at rear ends of the lower frames 16 to extend from the rear ends in an obliquely rearward and upward direction (only the rear frame 17 on the viewer side is illustrated). Most of the body frame 11 is covered with a body cover 23.

The front fork 13 is made up of a steering stem 24 rotatably supported on the head pipe 12, a bottom bridge 25 attached to a lower end of the steering stem 24, and buffers 26 mounted at both left and right ends of the bottom bridge 25 (only the buffer 26 on the viewer side is illustrated). A handlebar 31 is mounted at an upper end of the steering stem 24. A front wheel 33 is supported via an axle 32 by lower ends of the left and right buffers 26. The front wheel 33 is covered from above with a front fender 34 attached to the front fork 13. A pair of left and right fork guards 30L, 30R is mounted to the front fender 34 to protect the front fork 13 (only the fork guard 30L on the viewer side is illustrated).

The power unit 21 is made up of an engine 35 forming its front portion, and a continuously variable transmission 36 mounted integrally to a rear portion of the engine 35. In the engine 35, a cylinder section including a cylinder head, a cylinder block and the like extends approximately toward the front from a crankcase 37, while an intake device including an air cleaner 38 is connected to the cylinder head. The continuously variable transmission 36 includes a transmission case 39 mounted integrally to a rear end of the crankcase 37. A rear wheel 43 is mounted via an output shaft 42 to a rear end of the transmission case 39. A rear cushion unit 45 is placed to extend between one of the rear frames 17 and the transmission case 39.

An openable and closable seat 46 is mounted to an upper portion of the storage box 22.

The body cover 23 includes a front cover 51 covering the front of an upper portion of the front fork 13, a pair of left and right front lower covers 52 placed contiguously with a lower end of the front cover 51 (only the front lower cover 52 on the viewer side is illustrated), a handlebar cover 53 covering a central portion of the handlebar 31, a front inner cover 54 covering the rear of the upper portion of the front fork 13, a leg shield 56 covering the rear of the upper portion of the front fork 13 and connected to left and right ends of the front cover 51 to cover the front of the legs of a rider, a floor step 57 extending downward and rearward from a lower end of the leg shield 56 to let the rider rest his/her feet on the floor step 57, a pair of left and right floor side skirts 58 extending downward from the left and right edges of the floor step 57 (only the floor side skirt 58 on the viewer side is illustrated), and a pair of left and right rear side skirts 59 placed contiguously with rear ends of the floor side skirts 58 (only the rear side skirt 59 on the viewer side is illustrated.

The body cover 23 further includes a center cover 61 extending from the rear end of the floor step 57 to below a front end of the seat 46, a pair of left and right body side covers 62 extending from the floor step 57 and the center cover 61 toward the rear of the vehicle along below the side edges of the seat 46 (only the body side cover 62 located on the viewer side is illustrated), a rear center cover 63 placed rearward of the seat 46 to cover an area between rear ends of the left and right body side covers 62, a pair of left and right body lower covers 64 extending rearward from the rear end of the floor step 57 along lower edges of the left and right body side covers 62 (only the body lower cover 64 on the viewer side is illustrated), and a pair of left and right rear side covers 66 connected to lower edges of rear ends of the body side covers 62 (only the rear side cover 66 on the viewer side is illustrated).

As regards the handlebar 53, a head light 71 is mounted to a front portion, a windshield 72 is mounted to an upper portion, and a pair of left and right rearview mirrors 73 is mounted to left and right side portions (only the rearview mirror 73 on the viewer side is illustrated). A side stand 75 is mounted to the lower frame 16, while a main stand 76 is mounted to a lower portion of the crankcase 37. For reference sake, in the drawing, reference sign 74 (only reference sign 74 on the viewer side is illustrated) denotes a blinker, 77 a grab rail gripped by a pillion passenger, 78 a luggage box mounted on a rear portion, of the grab rail 77, 81 a rear fender covering from above the rear wheel 43, 82 a tail lamp, and reference sign 83 denotes a license plate.

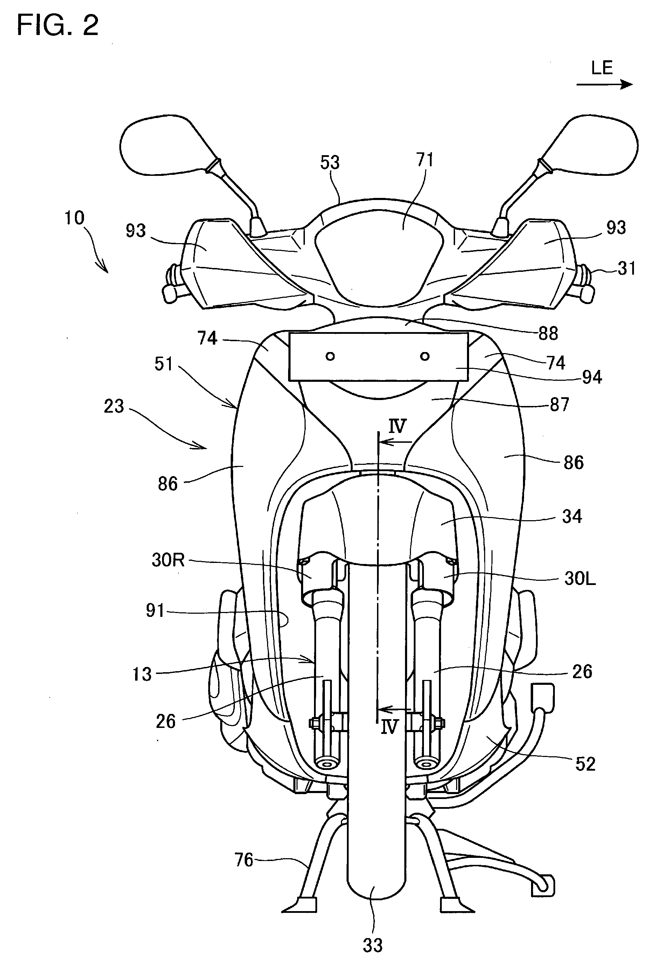

Fig. 2 is a front view showing the motorcycle 10.

The front cover 51 is made up of a pair of left and right lower covers 86, a middle cover 87 of a Y shape in front view that is placed between upper portions of the lower covers 86, and an upper cover 88 placed above the middle cover 87. The lower covers 86 and the middle cover 87, together with the left and right front lower covers 52, form an opening 91.

From the opening 91, a lower portion of the front fork 13, the front wheel 33, the front fender 34 and the like protrude outward. Reference signs 93, 93 in the drawing denote hand guards for covering the front of both the ends of the handlebar 31, and reference sign 94 denotes a license plate attached to the upper cover 88.

A pair of left and right fork guards 30L, 30R cover upper portions of the left and right buffers 26 of the front fork 13 which extend out of the front fender 34.

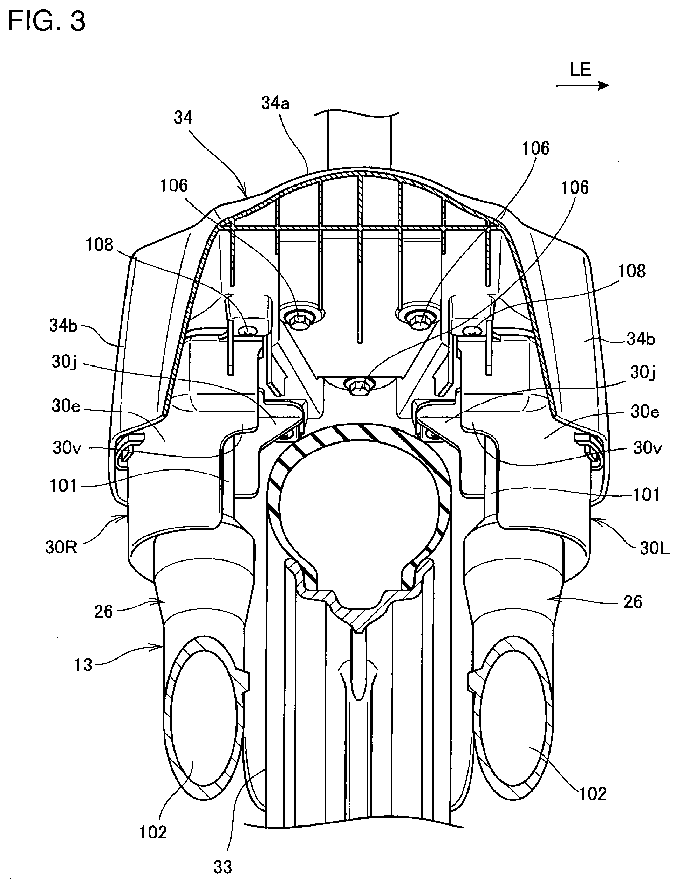

Fig. 3 is a section view taken along line III-III in Fig. 1.

The front fender 34 includes an upper wall 34a attached to the bottom bridge 25 (see Fig. 1), and left and right sidewalls 34b placed outward of the front fork 13 in the vehicle-width direction. The fork guards 30L, 30R are formed in generally bilaterally symmetrical shapes, which are attached to the upper wall 34a of the front fender 34 and placed inward of the sidewalls 34b of the front fender 34 in the vehicle-width direction in order to cover the front, side and rear of fork pipes 101 respectively included in the buffers 26 of the front fork 13 for protection for the fork pipes 101 from flying stones and the like.

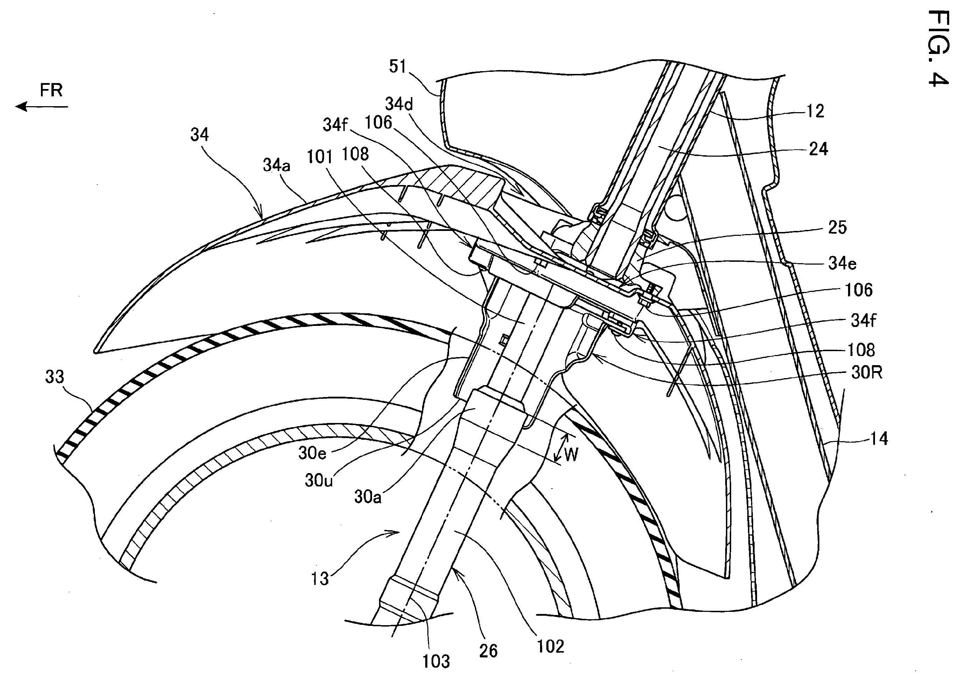

Fig. 4 is a sectional view taken along line IV-IV in Fig. 2, which shows a section of a front portion of the vehicle body.

The buffer 26 has a telescopic structure made up of the fork pipe 101 which is attached at the upper end to the bottom bridge 25 and a bottom case 102 into which the fork pipe 101 is slidably inserted and which has a lower end supporting the front wheel 33. A cushioning mechanism including a damper and a spring is incorporated into the fork pipe 101 and the bottom case 102. Incidentally, reference sign 103 denotes the axis of the buffer 26.

The bottom case 102 is provided at an upper end with a larger diameter portion 30a incorporating a sealing member sealing the area between the bottom case 102 and the fork pipe 101. A lateral side of the larger diameter portion 30a and a lateral side of the fork pipe 101 placed upward of the larger diameter portion 30a are covered with each of the fork guards 30L, 30R (only the fork guard 30R facing away from the viewer is illustrated). That is, a lower end 30u of each fork guard 30L, 30R is placed within a width W along the axis 103 of the larger diameter portion 30a.

The front fender 34 has an integrally recessed mount portion 34d formed in an upper wall 34a of an approximate arc shape in cross section. The front fender 34 includes a bridge mount portion 34e of an approximately flat shape to be mounted to the bottom bridge 25, and a plurality of guard mounting portions 34f formed in positions downward of the bridge mount portion 34e, which are provided in the mount portion 34d. The left and right fork guards 30L, 30R are attached to the guard mounting portions 34f.

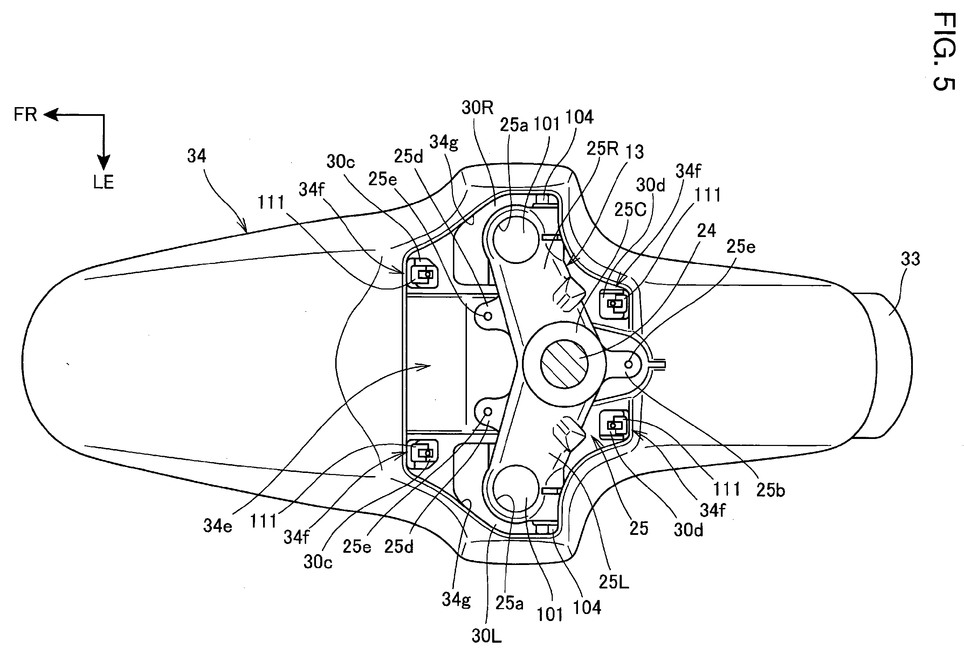

Fig. 5 is an explanatory diagram showing the front fork 13 and the front fender 34, which is a view from above in a direction along the axis the steering stem 24.

The bottom bridge 25 of the front fork 13 is made up of a tubular center boss 25C which is located at the center of the bottom bridge 25 and to which the steering stem 24 is attached, and a left arm 25L and a right arm 25R extending respectively from the center boss 25C in obliquely forward and sideward directions. Upper ends of the fork pipes 101 are fitted respectively into fitting portions 25a passed vertically and formed at leading ends of the left arm 25L and the right arm 25R, and are fastened with bolts 104.

The bottom bridge 25 integrally includes a rearward protrusion 25b protruding rearward from the center boss 25C and forward protrusions 25d protruding forward respectively from the left arm 25L and the right arm 25R. The front fender 34 is attached to the rearward protrusion 25b and the forward protrusion 25d. Reference sign 25e denotes internal threads formed in the rearward protrusion 25b and the forward protrusions 25d in order to fasten the front fender 34 with screws (not shown).

The front fender 34 includes insertion holes 34g bored in both the lateral sides of the bridge mount portion 34e for the insertion of the buffers 26 (see Fig. 2) of the front fork 13, and the four guard mounting portions 34f provided on both the lateral sides of the bridge mount portions 34e and located forward of the insertion holes 34g and rearward of the insertion holes 34g for the mounting of the fork guards 30L, 30R.

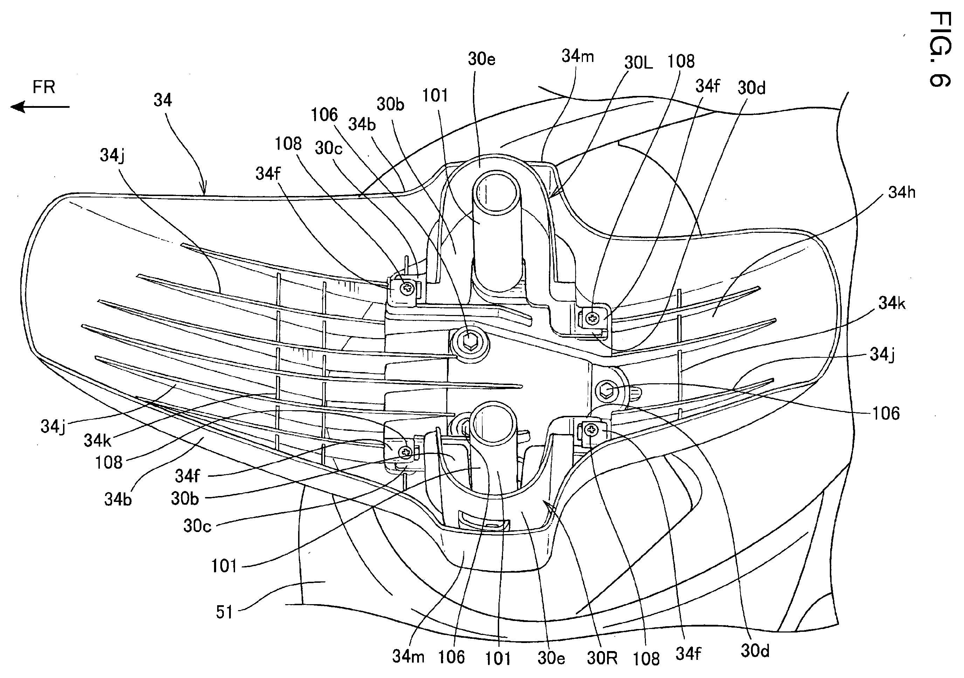

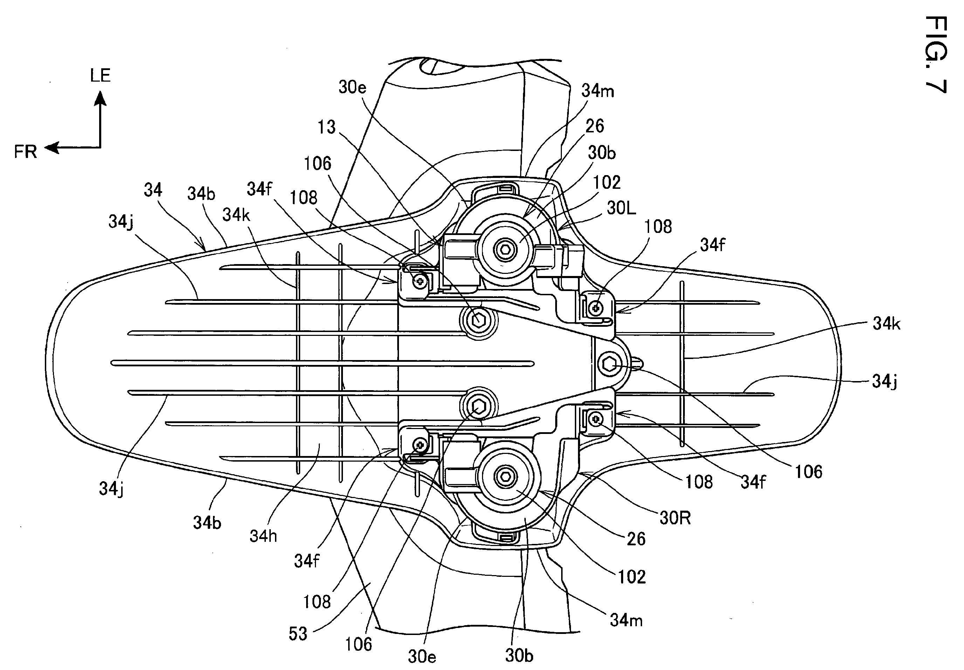

Fig. 6 is a perspective view illustrating the inner side of the front fender 34 as viewed obliquely from below. Fig. 7 is an explanatory diagram illustrating the inner side of the front fender 34 as viewed from below along the longitudinal direction of the buffer 26.

As illustrated in Fig. 6 and Fig. 7, each of the fork guards 30L, 30R is mounted to a plurality of guard mounting portions 34f provided on an inner surface 34h of the front fender 34, in such a manner as to surround the front, the outer side and the rear of the corresponding fork pipe 101 of the front fork 13.

The fork guard 30L is an integrally-molded component that includes a belt-shaped flat base, plate portion 30b surrounding the fork pipe 101, a front extension 30c and a rear extension 30d extending forward and rearward from inner ends of the base plate portion 30b in the vehicle-width direction, and a peripheral wall 30e extending continuously from the front edge through the side edge to the rear edge of the base plate portion 30b. The front extension 30c and the rear extension 30d are attached respectively to the guard mounting portions 34f of the front fender 34. The fork guard 30R, which is generally bilaterally symmetrical to the fork guard 30L, is an integrally-molded component including the base plate portion 30b, the front extension 30c, the rear extension 30d and the peripheral wall 30e.

A plurality of lengthwise ribs 34j extending in the longitudinal direction and a plurality of breadthwise ribs 34k extending in the vehicle-width direction are provided integrally on the inner surface 34h of the front fender 34 to increase the stiffness.

Left and right sidewalls 34b of the front fender 34 have bulge portions 34m respectively located approximately at the center in the longitudinal direction and laterally outward of the fork guards 30L, 30R to curve outward in the vehicle-width direction.

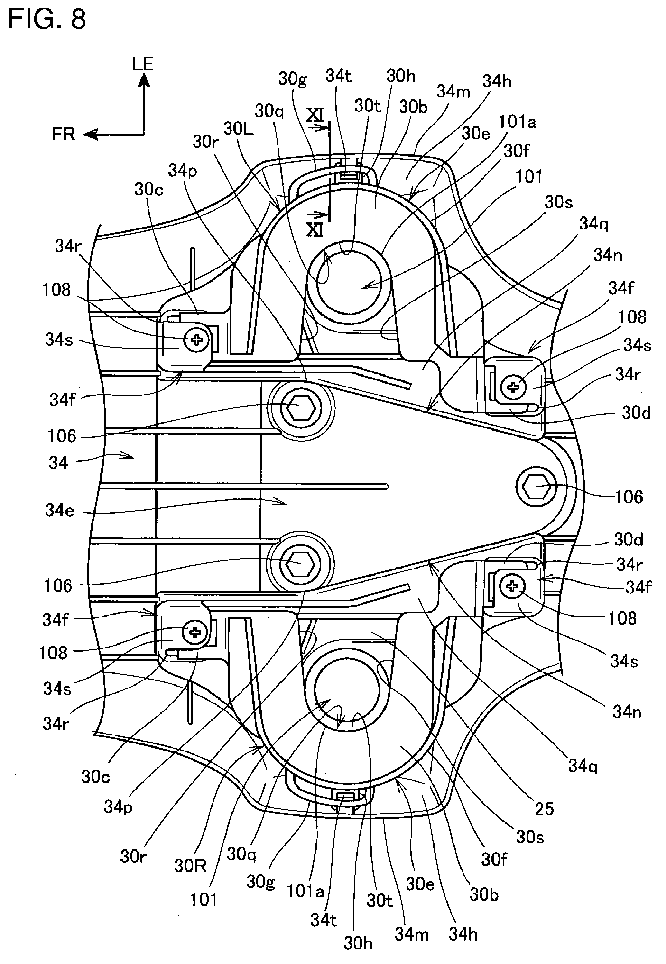

Fig. 8 is an enlarged view showing essential parts of the front fender 34 and the fork guards 30L, 30R in Fig. 7.

In the bridge mount portion 34e of the front fender 34, the edges 34n on its both sides is formed to extend parallel to each other in a front portion and then closer to each other toward the rear in a tapering form in a rear portion. The edges 34n change from the parallel form to the tapering form in bent edges 34p, and two bolts 106 are placed inward of the bent edges 34p in the vehicle-width direction for fastening the front fender 34 to the bottom bridge 25. Another bolt 106 is placed at a rear end of the tapering form of the edges 34n for fastening the front fender 34 to the bottom bridge 25.

A pair of left and right bottoms 34q is formed at a lower level than the edges 34n. The guard mounting portions 34f are formed respectively in front portions and rear portions of the bottoms 34q (which form part of the mount portion 34d). The guard mounting portions 34f respectively include insertion slits 34r into which the front extensions 30c and the rear extensions 30d of the fork guards 30L, 30R are inserted, and mounting walls 34s for fastening respectively the front extensions 30c and the rear extensions 30d with screws 108.

An inner peripheral edge 30q of the base plate portion 30b of each of the fork guards 30L, 30R includes two linear portions 30r, 30s and an arc portion 30t connecting between the linear portions 30r, 30s. The arc portion 30t is placed in contact with and along an outer peripheral face 101a of the fork pipe 101, or alternatively, placed close to and along the outer peripheral face 101a of the fork pipe 101.

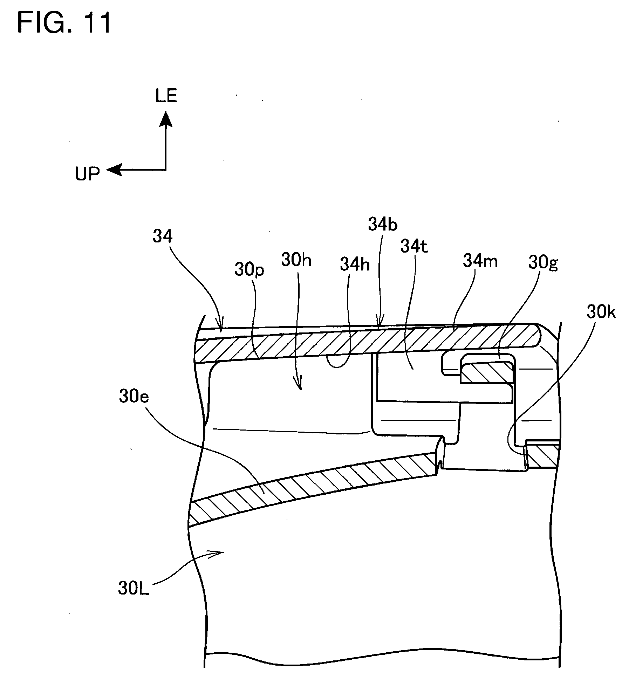

An L-shaped hook 34t (also see Fig. 11) is formed integrally on the inner surface 34h of each of the bulge portions 34m of the front fender 34. Correspondingly, a protrusion engagement 30g and a protrusion wall 30h are formed integrally on an outer peripheral face 30f of the peripheral wall 30e of each fork guard 30L, 30R, the protrusion engagement 30g being engaged with the hook 34t of the front fender 34 and the protrusion wall 30h regulating a vertical position of the peripheral wall 30e in cooperation with the hook 34t.

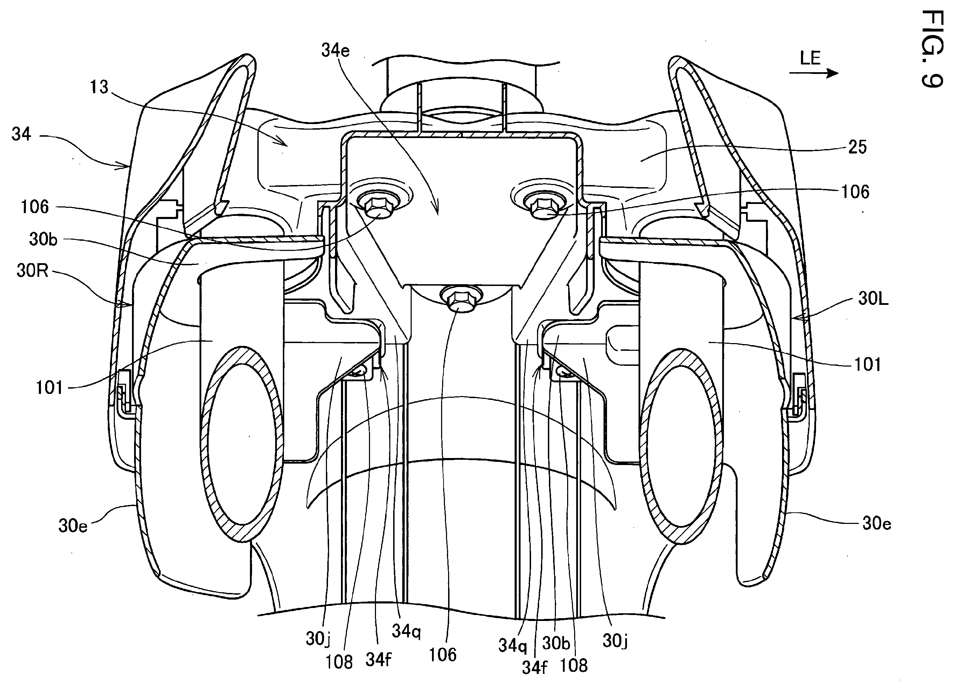

Fig. 9 is a sectional view showing the front fender 34 and the fork guards 30L, 30R, in which the front fender 34 and the fork guards 30L, 30R are vertically cut.

In each of the fork guards 30L, 30R, the peripheral wall 30e extends to a point rearward of the fork pipe 101, and to a point inward of the fork pipe 101 in the vehicle-width direction. Further, a rib wall 30j is formed integrally on the peripheral wall 30e to protrude inward in the vehicle-width direction from the inner edge in the vehicle-width direction. Accordingly, the rib wall 30j prevents rainwater and/or the like flying forward from the rear with rotation of the rear wheel 43 (see Fig. 3) from flying forward of the vehicle.

Returning to Fig. 3, the peripheral wall 30e extends to a point forward of the fork pipe 101, and a rib wall 30v is formed integrally with the front portion of the peripheral wall 30e. The rib wall 30v protrudes inward in the vehicle-width direction from the inner edge of the peripheral wall 30e in the vehicle-width direction.

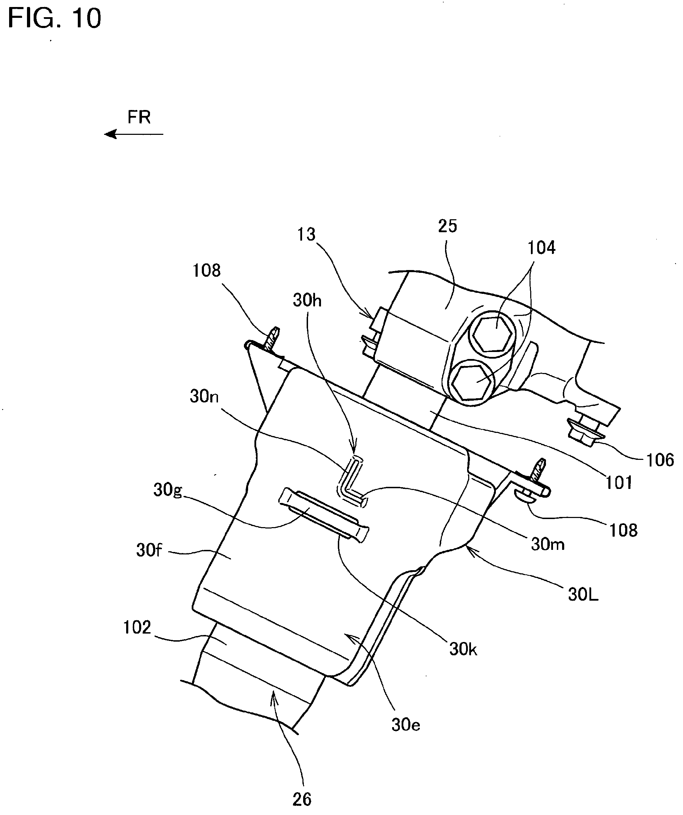

Fig. 10 is a side view showing essential parts of the front fork 13 and the fork guard 30L.

On the outer peripheral face 30f of the peripheral wall 30e of the fork guard 30L, the protrusion engagement 30g formed to extend perpendicular to the axis direction of the buffer 26, and an L-shaped protrusion wall 30h in side view are formed. The protrusion wall 30h is located away from and upward of the protrusion engagement 30g in the axial direction of the buffer 26. A rectangularly-shaped through hole 30k is bored in a position inward of the protrusion engagement 30g in the vehicle-width direction. The protrusion wall 30h includes a lower wall 30m extending perpendicular to the axis direction and an upper wall 30n extending in the axis direction from an end of the lower wall 30m.

Fig. 11 is a sectional view taken along line XI-XI in Fig. 8.

The protrusion engagement 30g of the fork guard 30L is in a state of being engaged with the hook 34t of the front fender 34. In addition, the protrusion wall 30h of the fork guard 30L is located above the hook 34t, while the leading end 30p of the protrusion wall 30h abuts on the inner surface 34h of the front fender 34. Therefore, the hook 34t is placed vertically between the protrusion engagement 30g and protrusion wall 30h, so that a vertical movement of the fork guard 30L from or toward the front fender 34 is controlled. The abutting of the leading end 30p of the protrusion wall 30h with the inner surface 34h of the front fender 34 makes it possible to increase the stiffness of the bulge portion 34m of the front fender 34. As a result, the bulge portion 34m and the fork guard 30L prevent each other from vibrating in the vehicle-width direction.

The following describes how to mount the foregoing fork guard 30L to the front fender 34.

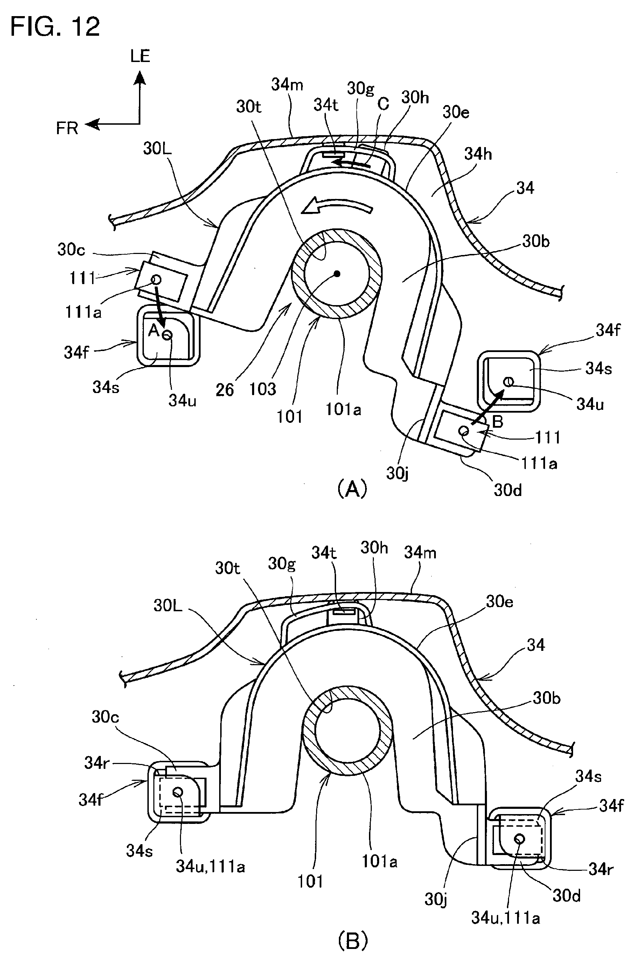

Fig. 12 is operation diagrams showing how to mount the fork guard 30L, in which Fig. 12(A) is the operation diagram showing a state before the mounting process, while Fig. 12(B) is the operation diagram showing a state during the mounting process.

As shown in Fig. 12(A), while the arc portion 30t of the fork guard 30L abuts on the outer peripheral face 101a of the fork pipe 101, the fork guard 30L is moved in the axis direction of the fork pipe 101 to be brought closer to the front fender 34. At this time, the front extension 30c and the rear extension 30d of the fork guard 30L are tilted to stay away from the guard mounting portions 34f of the front fender 34. Also, the protrusion engagement 30g of the fork guard 30L is placed to be locked with the hook 34t of the front fender 34. Reference sign 34u denotes a screw insertion hole bored in a mounting wall 34s of the guard mounting portion 34f, reference sign 111 denotes a nut member mounted on the front extension 30c and the rear extension 30d, and reference sign 111a denotes a screw hole formed in the nut member 111.

Then, the fork guard 30L is rotated relative to the fork pipe 101 and the front fender 34 as indicated by outline arrow, while the arc portion 30t is abutting on the outer peripheral face 101a of the fork pipe 101. In short, the fork guard 30L is rotated about the axis 103 of the buffer 26. As a result, the front extension 30c and the rear extension 30d are moved respectively toward the guard mounting portions 34f as indicated by arrows A, B, while the protrusion engagement 30g and the protrusion wall 30h are moved toward the hook 34t as indicated by arrow C.

As a result, as shown in Fig. 12(B), the front extension 30c and the rear extension 30d are inserted respectively into the insertion slits 34r of the guard mounting portions 34f, so that the front extension 30c and the rear extension 30d respectively overlap the mounting walls 34s of the guard mounting portions 34f and the screw insertion holes 34u are aligned with the screw holes 111a. In this stage, the screw 108 (see Fig. 8) is inserted through each of the screw insertion holes 34u and then screwed in the corresponding screw hole 111a in order to secure the fork guard 30L to the front fender 34. Further, as shown in Fig. 11, the protrusion engagement 30g is engaged with the hook 34t of the front fender 34 and also the protrusion wall 30h is located above the hook 34t so that the leading end 30p of the protrusion wall 30h abuts on the inner surface 34h of the front fender 34.

As described above in Figs. 1 and 3, a fork guard structure is for assembling the fork guards 30L, 30R, which cover at least a part of a pair of the left and right cylindrical buffers 26 forming the front fork 13, to the front fender 34 that is formed in a box shape opened downward to cover above the front wheel 33 and mounted to the front fork 13 supporting the front wheel 33 of the motorcycle 10. In the fork guard structure, the fork guards 30L, 30R are fixed to the inside of the front fender 34.

With this construction, since the fork guards 30L, 30R are secured to the inside of the front fender 34, it is likely to circumvent constraints of a flow of travelling air and appearance quality, leading to an increase in the degree of freedom in shape, dimensions and placement and also to the placement of the fork guards 30L, 30R in positions as close to the buffers 26 as possible. Accordingly, it is possible to enhance the effect of the fork guards 30L, 30R protecting the front fork 13.

As shown in Fig. 3, Fig, 6 and Fig. 8, since each of the fork guards 30L, 30R has a surface facing at least outward in a vehicle-width direction (that is, the outer peripheral face 30f of the peripheral wall 30e), and the surface forms part of a cylinder to extend along the corresponding buffer 26, the fork guards 30L, 30R are formed into a shape along the shape of the front fork 13, resulting in a further enhancement in the effect of protecting the front fork 13.

As shown in Fig. 5 and Fig. 7, the front fender 34 is formed with an insertion hole 34g serving as an opening for insertion of the front fork 13, and the fork guards 30L, 30R are placed to block a part of the insertion hole 34g. Because of this, a large insertion hole 34g for front-fork insertion is formed in the front fender 34 to facilitate the ability to assemble the front fork 13 and the front fender 34 into one. And, since a part of the insertion hole 34g is blocked with the fork guards 30L, 30R, the area of the opening for passing from the front wheel 33 into above the front fender 34 is minimized as possible, so that the amount of water and/or the like flying in the upward direction of the front fender 34 can be reduced.

As shown in Fig. 5, Fig. 7, Fig. 12(A) and Fig. 12(B), the fork guards 30L, 30R are formed in such a manner as to surround some of the buffers 26 and to be removable while the front fender 34 is fixed to the front fork 13. The fork guards 30L, 30R are fixed to the front fender 34 by rotating about the axes 103 of the buffers 26. Therefore, after the front fender 34 and the front fork 13 have been sub-assembled, the fork guards 30L, 30R are able to be assembled. Also, by use of a space between the left and right buffers 26, the fork guards 30L, 30R are able to be inserted and rotated to be secured on the outer side of the buffers 26. This makes it possible to enhance the ability of assembling of the fork guards 30L, 30R.

As shown in Fig. 9, since the fork guards 30L, 30R are provided with the rib walls 30j placed rearward of the buffers 26 to extend toward the center of the vehicle body in the vehicle-width direction, water and/or the like splashed at the rear of the front fender 34 by the front wheel 33 can be prevented from flying forward of the front fender 34 by being scraped off with the rib walls 30j, resulting in an increase in the effect of protecting the front fork 13.

As shown in Fig. 5 and Fig. 7, the left and right buffers 26 are supported and coupled by the bottom bridge 25. The front fender 34 has a top face fixed to the bottom bridge 25. And, the fork guards 30L, 30R are fixed to the front fender 34 in positions forward and rearward of the bottom bridge 25. For this reason, the fork guards 30L, 30R are fixed to the front fender 34 while being placed on the front side and the rear side of the bottom bridge 25 which is a stiffness member, thereby improving the stiffness of the fixing portions of the fork guards 30L, 30R. As a result, since the support stiffness is high even when the fork guards 30L, 30R and the buffers 26 are placed close to each other, it is possible to avoid the interference between the fork guards 30L, 30R and the buffers 26 to offer effective protection for the front fork 13.

As shown in Fig. 5, Fig. 7 and Fig. 8, since a fastening (fastening using a plurality of bolts 106) between the bottom bridge 25 and the front fender 34 is provided between a pair of left and right fork guards 30L, 30R, the front fender 34 itself to which the fork guards 30L, 30R are secured is fixed to the bottom bridge 25 between the fork guards 30L, 30R. This lets the support stiffness of the front fender 34 have an effect on the fork guards 30L, 30R, thus enabling strong support for the fork guards 30L, 30R.

As shown in Fig. 4, the buffer 26 is structured in a telescopic form having a bottom case 102 as an outer cylinder formed in the lower portion and a fork pipe 101 as an inner cylinder formed in the upper portion. The larger diameter portion 30a as a largest diameter portion is formed at the upper end of the bottom case 102. The lower ends 30u of the fork guards 30L, 30R are located within a range of the vertical width W of the larger diameter portion 30a. As a result, close proximity placement of the front fork 13 to the fork guards 30L, 30R can be provided, and the fork guards 30L, 30R are made appear to be integrated with the front fork 13, leading to improved appearance quality.

As shown in Fig. 8 and Fig. 11, since the sidewall 34b of the front fender 34 and the fork guards 30L, 30R, more specifically, the protrusion walls 30h, abut on each other, an increase in stiffness of the sidewalls 34b of the front tender 34 is offered by the fork guards 30L, 30R. Accordingly, a vibration reduction can be achieved on the sidewalls 34b of the front fender 34 and the fork guards 30L, 30R.

It should be understood that the above-described embodiment is given to illustrate an aspect of the present invention, and various modifications and applications may be arbitrarily made without departing from the scope of the invention as defined in the appended claims.

The case where the invention is applied to the motorcycle 10 has been described; however, the invention is not limited thereto, but also is applicable to saddle-ride type vehicles in addition to the.motorcycles.

### [Reference Signs List]

10 Motorcycle (two-wheeled vehicle)
13 Front fork
25 Bottom bridge
26 Buffer
30L, 30R Fork guard
30a Larger diameter portion (largest diameter portion)
30j Rib wall
33 Front wheel
34 Front fender
34b Sidewall
34g Insertion hole (opening)
101 Fork pipe (inner cylinder)
102 Bottom case (outer cylinder)
103 Axis of buffer
W Width of larger diameter portion (vertical width of largest diameter portion)

## Claims

1. A fork guard structure comprising a front fender (34) formed in a box shape opened downward to cover above a front wheel (33) of a motorcycle (10) which is adapted to be mounted to a front fork (13) supporting the front wheel (33), and a pair of left and right fork guards (30L, 30R) adapted to cover at least a part of a pair of left and right cylindrical buffers (26) forming the front fork (13), which are assembled to the front fender (34), wherein the fork guards (30L, 30R) are fixed to the inside of the front fender (34),
each of the fork guards (30L, 30R) is formed in such a manner as to surround, in use the front of a fork pipe (101) included in the corresponding buffer (26), and to be removable While the front fender (34) is fixed to the front fork (13); **characterized in that** each of the fork guards (30L,30R) is formed in such a manner as to surround, in use, also the outer side and the rear of the fork pipe (101) included in the corresponding buffer (26) and the fork guards (30L, 30R) are adapted to be fixed to the front fender (34) by rotating about axes (103) of the buffers (26).

2. The fork guard structure according to claim 1,
wherein: each of the fork guards (30L, 30R) has a surface facing, in use, at least outward in a vehicle-width direction; and
the surface forms part of a cylinder adapted to extend along the corresponding buffer (26).

3. The fork guard structure according to claim 1 or 2,
wherein: the front fender (34) is formed with an opening (34g) for insertion of the front fork (13); and
the fork guards (30L, 30R) are placed to block a part of the opening (34g).

4. The fork guard structure according to any one of claims 1 to 3, wherein the fork guards (30L, 30R) are provided with rib walls (30j) adapted to be placed rearward of the buffers (26) to extend toward the center of a vehicle body in the vehicle-width direction.

5. The fork guard structure according to any one of claims 1 to 4,
wherein: the left and right buffers (26) are supported and coupled by a bottom bridge (25);
the front fender (34) has a top face adapted to be fixed to the bottom bridge (25); and
the fork guards (30L, 30R) are fixed to the front fender (34) in positions, in use, forward and rearward of the bottom bridge (25).

6. The fork guard structure according to claim 5, wherein a fastening between the bottom bridge (25) and the front fender (34) is provided between the pair of the left and right fork guards (30L, 30R).

7. The fork guard structure according to any one of claims 1 to 6,
wherein: each of the buffers (26) is structured in a telescopic form having an outer cylinder (102) formed in a lower portion and an inner cylinder (101) formed in an upper portion;
a largest diameter portion (30a) is formed at an upper end of the outer cylinder (102); and
a lower end (30u) of each fork guard (30L, 30R) is adapted to be located within a range of a vertical width (W) of the largest diameter portion (30a).

8. The fork guard structure according to any one of claims 1 to 7, wherein a sidewall (34b) of the front fender (34) and the fork guards (30L, 30R) abut on each other.

## Patentansprüche

1. Gabelschutzstruktur, welche aufweist: eine Frontabdeckung (34), die in einer nach unten offenen Kastenform ausgebildet ist, um oberhalb eines Vorderrads (33) eines Kraftrads (10) abzudecken, wobei sie zum Anbringen an einer das Vorderrad (33) tragenden Frontgabel (13) ausgelegt ist, sowie ein Paar von linken und rechten Gabelschützern (30L, 30R), die dazu ausgelegt sind, zumindest ein Teil eines Paars von die Frontgabel (13) bildenden linken und rechten zylindrischen Dämpfern (26) abzudecken, wobei sie an der Frontabdeckung (34) angebracht sind, wobei die Gabelschützer (30L, 30R) an der Innenseite der Frontabdeckung (34) befestigt sind,
wobei jeder der Gabelschützer (30L, 30R) derart ausgebildet ist, dass er im Gebrauch die Vorderseite eines in dem entsprechendem Dämpfer (26) enthaltenen Gabelrohrs (101) umgibt, und entfernbar ist, während die Frontabdeckung (34) an der Frontgabel (13) befestigt ist;
**dadurch gekennzeichnet, dass** jeder der Frontschützer (30L, 30R) derart ausgebildet ist, dass er im Gebrauch auch die Außenseite und die Rückseite des im entsprechenden Dämpfer (26) enthaltenen Gabelrohrs (101) umgibt, und die Gabelschützer (30L, 30R) dazu ausgelegt sind, durch Drehung um Achsen (103) der Dämpfer (26) an der Frontabdeckung (34) befestigt zu werden.

2. Die Gabelschutzstruktur nach Anspruch 1, wobei:
jeder der Frontschützer (30L, 30R) eine Oberfläche aufweist, die im Gebrauch in Fahrzeugbreitenrichtung zumindest auswärts weist; und
die Oberfläche ein Teil eines Zylinders bildet, der dazu ausgelegt ist, sich entlang dem entsprechenden Dämpfer (26) zu erstrecken.

3. Die Gabelschutzstruktur nach Anspruch 1 oder 2, wobei:
die Frontabdeckung (34) mit einer Öffnung (34g) zum Einsetzen der Frontgabel (13) ausgebildet ist; und
die Gabelschützer (30L, 30R) angeordnet sind, um ein Teil der Öffnung (34g) zu schließen.

4. Die Gabelschutzstruktur nach einem der Ansprüche 1 bis 3, wobei die Gabelschützer (30L, 30R) mit Rippenwänden (30j) versehen sind, welche dazu ausgelegt sind, hinter den Dämpfern (26) angeordnet zu werden, so dass sie sich in der Fahrzeugbreitenrichtung zur Mitte eines Fahrzeugkörpers hin erstrecken.

5. Die Gabelschutzstruktur nach einem der Ansprüche 1 bis 4, wobei:
die linken und rechten Dämpfer (26) von einer unteren Brücke (25) getragen und damit gekuppelt sind;
die Frontabdeckung (34) eine Oberseite aufweist, welche zur Befestigung an der unteren Brücke (25) ausgelegt ist; und
die Gabelschützer (30L, 30R) an der Frontabdeckung (34) in Positionen im Gebrauch vor und hinter der unteren Brücke (25) befestigt sind.

6. Die Gabelschutzstruktur nach Anspruch 5, wobei eine Befestigung zwischen der unteren Brücke (25) und der Frontabdeckung (34) zwischen dem Paar der linken und rechten Gabelschützer (30L, 30R) vorgesehen ist.

7. Die Gabelschutzstruktur nach einem der Ansprüche 1 bis 6, wobei:
jeder der Dämpfer (26) in einer teleskopischen Form strukturiert ist, die einen in einem unteren Abschnitt ausgebildeten Außenzylinder (102) und einen in einem oberen Abschnitt ausgebildeten Innenzylinder (101) aufweist; und
ein im Durchmesser größter Abschnitt (30a) an einem oberen Ende des Außenzylinders (102) ausgebildet ist; und
ein Unterende (30u) jedes Gabelschützers (30L, 30R) zur Anordnung innerhalb eines Bereichs einer vertikalen Breite (W) des im Durchmesser größten Abschnitts (30a) ausgelegt ist.

8. Die Gabelschutzstruktur nach einem der Ansprüche 1 bis 7, wobei eine Seitenwand (34b) die Frontabdeckung (34) und die Gabelschützer (30L, 30R) aneinander abgestützt sind.

## Revendications

1. Structure de protection de fourche comprenant un garde-boue avant (34) formé selon une forme de caisson ouvert vers le bas afin de recouvrir le dessus d'une roue avant (33) d'une motocyclette (10), qui est adaptée pour être montée sur une fourche avant (13) supportant la roue avant (33), et une paire de protections de fourche gauche et droite (30L, 30R) adaptées pour recouvrir au moins une partie d'une paire d'amortisseurs cylindriques gauche et droit (26) formant la fourche avant (13), qui sont assemblées au garde-boue avant (34), dans laquelle les protections de fourche (30L, 30R) sont fixées à l'intérieur du garde-boue avant (34),
chacune des protections de fourche (30L, 30R) est formée afin d'entourer, à l'usage, l'avant d'un tuyau de fourche (101) inclus dans l'amortisseur (26) correspondant, et être amovible alors que le garde-boue avant (34) est fixé à la fourche avant (13) ; **caractérisé en ce que** chacune des protections de fourche (30L, 30R) est formée afin d'entourer, à l'usage également, le côté externe et l'arrière du tuyau de fourche (101) inclus dans l'amortisseur (26) correspondant, et les protections de fourche (30L, 30R) sont adaptées pour être fixées sur le garde-boue avant (34) en tournant autour des axes (103) des amortisseurs (26).

2. Structure de protection de fourche selon la revendication 1, dans laquelle : chacune des protections de fourche (30L, 30R) a une surface faisant face, à l'usage, à au moins un extérieur dans le sens de la largeur du véhicule ; et
la surface fait partie d'un cylindre adapté pour s'étendre le long de l'amortisseur (26) correspondant.

3. Structure de protection de fourche selon la revendication 1 ou 2,
dans laquelle : le garde-boue avant (34) est formé avec une ouverture (34g) pour l'insertion de la fourche avant (13) ; et
les protections de fourche (30L, 30R) sont placées pour bloquer une partie de l'ouverture (34g).

4. Structure de protection de fourche selon l'une quelconque des revendications 1 à 3, dans laquelle les protections de fourche (30L, 30R) sont prévues avec des parois de nervure (30j) adaptées pour être placées vers l'arrière des amortisseurs (26) pour s'étendre vers le centre d'un corps de véhicule dans le sens de largeur du véhicule.

5. Structure de protection de fourche selon l'une quelconque des revendications 1 à 4,
dans laquelle : les amortisseurs gauche et droit (26) sont supportés et couplés par un pont inférieur (25) ;
le garde-boue avant (34) a une face supérieure adaptée pour être fixée au pont inférieur (25) ; et
les protections de fourche (30L, 30R) sont fixées sur le garde-boue avant (34) dans des positions, à l'usage, vers l'avant et vers l'arrière du pont inférieur (25).

6. Structure de protection de fourche selon la revendication 5, dans laquelle une fixation entre le pont inférieur (25) et le garde-boue avant (34) est prévue entre la paire de protections de fourche gauche et droite (30L, 30R).

7. Structure de protection de fourche selon l'une quelconque des revendications 1 à 6,
dans laquelle : chacun des amortisseurs (26) est structuré sous une forme télescopique ayant un cylindre externe (102) formé dans une partie inférieure et un cylindre interne (101) formé dans une partie supérieure ;
une partie de plus grand diamètre (30a) est formée au niveau d'une extrémité supérieure du cylindre externe (102) ; et
une extrémité inférieure (30u) de chaque protection de fourche (30L, 30R) est adaptée pour être positionnée dans une plage d'une largeur verticale (W) de la partie de plus grand diamètre (30a).

8. Structure de protection de fourche selon l'une quelconque des revendications 1 à 7, dans laquelle une paroi latérale (34b) du garde-boue avant (34) et les protections de fourche (30L, 30R) viennent en butée entre elles.
